# EUROPÄISCHE PATENTSCHRIFT

(11) **EP 3 039 406 B1**
(45) Veröffentlichungstag und Bekanntmachung des Hinweises auf die Patenterteilung: **24.02.2021**
(21) Anmeldenummer: 14758505.3
(22) Anmeldetag: 28.08.2014
(51) Int. Cl.: G01N 21/27, D21H 21/30, D21H 21/48, G07D 7/12

(54) **KALIBRIERMEDIUM FÜR WERTDOKUMENTSENSOREN**
CALIBRATION MEDIUM FOR VALUABLE DOCUMENT SENSORS
MOYEN D'ÉTALONNAGE DE CAPTEURS DE DOCUMENTS DE VALEUR

(30) Priorität: 29.08.2013 DE 102013014401
(43) Veröffentlichungstag der Anmeldung: 06.07.2016
(73) Patentinhaber: Giesecke+Devrient Currency Technology GmbH, 81677 München (DE)
(72) Erfinder: KECHT, Johann, 81677 München (DE); SCHLOSSBAUER, Axel, 81541 München (DE)
(86) Internationale Anmeldenummer: PCT/EP2014/002344
(87) Internationale Veröffentlichungsnummer: WO 2015/028152

(56) Entgegenhaltungen:
- WO-A1-81/03510
- DE-A1-102008 048 043
- DE-A1-102011 118 057

## Beschreibung

Die Erfindung betrifft ein Kalibriermedium zum Kalibrieren eines Sensors, der zur Prüfung mindestens einer optischen Eigenschaft von Wertdokumenten ausgebildet ist, sowie ein Verfahren zur Herstellung des Kalibriermediums und ein Verfahren zum Kalibrieren eines Sensors, der zur Prüfung mindestens einer optischen Eigenschaft von Wertdokumenten ausgebildet ist.

Zur Prüfung von Wertdokumenten werden üblicherweise Sensoren verwendet, mit denen die Art der Wertdokumente bestimmt wird und/oder mit denen die Wertdokumente auf Echtheit und/oder auf ihren Zustand geprüft werden. Derartige Sensoren werden beispielsweise zur Prüfung von Wertdokumenten wie Banknoten, Schecks, Ausweisen, Kreditkarten, Scheckkarten, Tickets, Gutscheinen und dergleichen verwendet. Die Wertdokumente werden in einer Vorrichtung zur Wertdokumentbearbeitung geprüft, in der, je nach den zu prüfenden Wertdokumenteigenschaften, ein oder mehrere unterschiedliche Sensoren enthalten sind. Üblicherweise werden die Sensoren in bestimmten zeitlichen Abständen oder bei aktuellem Anlass bezüglich ihrer korrekten Funktionsfähigkeit überprüft. Dazu wird der Sensor zunächst kalibriert und anschließend, falls nötig, justiert. Die Kalibrierung erfolgt üblicherweise mit Hilfe von Kalibriermedien, die dem Sensor zugeführt werden und von denen der Sensor Messsignale aufnimmt. Die Kalibriermedien können für die Überprüfung einer oder mehrerer Eigenschaften eines einzelnen Sensors ausgebildet sein, oder für die Überprüfung mehrerer oder aller relevanten Eigenschaften von mehreren oder allen relevanten Sensoren der Vorrichtung zur Wertdokumentbearbeitung. Beispielsweise werden für die Kalibrierung von Banknotensensoren Papierblätter oder Kunststoffblätter mit bekannten, vordefinierten Eigenschaften als Kalibriermedien eingesetzt, oder auch speziell für die Überprüfung der Sensoren präparierte Banknoten.

Die Kalibriermedien können von Hand in die Messebene der zu kalibrierenden Sensoren eingelegt werden. Bei den üblichen Vorrichtungen zur Wertdokumentbearbeitung werden die Wertdokumente in der Vorrichtung an den zur Prüfung verwendeten Sensoren vorbeitransportiert. Um die Sensoren zu kalibrieren wird in einem solchen Fall, anstelle der Wertdokumente, ein Kalibriermedium an den Sensoren vorbeitransportiert, wobei die Sensoren Messwerte des Kalibriermediums aufnehmen. Die Messwerte werden mit Sollwerten verglichen, die dem Kalibriermedium zugeordnet sind. Falls die Messwerte des Kalibriermediums von den Sollwerten des Kalibriermediums abweichen, wird eine Justage des betreffenden Sensors durchgeführt, bei der der Sensor möglichst so eingestellt wird, dass er bei Messung des Kalibriermediums zumindest näherungsweise die Sollwerte liefert. Der so justierte Sensor wird anschließend zur Prüfung von Wertdokumenten verwendet.

Je nach Art des zu prüfenden Wertdokument-Merkmals sind die Sensoren beispielsweise zur Prüfung optischer, magnetischer, elektrischer, mechanischer oder auch geometrischer Eigenschaften ausgebildet, und werden mit entsprechenden Standards kalibriert. Für Echtheitsmerkmale auf der Basis lumineszierender Merkmalsstoffe gibt es sogenannte Lumineszenzstandards zur Kalibrierung und gegebenenfalls Justierung der Sensoren. Dabei ist zu unterscheiden zwischen Absorptionsstandards, die Referenzsysteme für Messungen des Absorptionsverhaltens oder des Anregungsspektrums lumineszierender Substanzen darstellen, und Lumineszenzstandards, die Referenzsysteme für Messungen des Emissionsverhaltens lumineszierender Substanzen darstellen. Ferner ist zu unterscheiden zwischen Wellenlängenstandards, d.h. Referenzsystemen zur Überprüfung der Wellenlängenrichtigkeit, die eine oder vorzugsweise mehrere schmale Banden aufweisen müssen, und spektralen Standards, d.h. Referenzsystemen die einen möglichst breiten spektralen Bereich abdecken und daher möglichst breite, glatte und unstrukturierte Spektren aufweisen müssen. Insbesondere können Lumineszenzstandards dazu verwendet werden, die durch den Sensor im jeweiligen Spektralbereich detektierte Lumineszenzintensität zu quantifizieren, um sicherzustellen, dass unterschiedliche Sensoren bei Messung identischer Messobjekte möglichst identische Messwerte ausgeben.

Ein spektraler Lumineszenzstandard ist beschrieben in DE 10 2011 118 057 A1. Diese Schrift offenbart ein blattförmiges Kalibriermedium, das ein Trägermaterial und einen auf das Trägermaterial aufgebrachten Lumineszenzstandard, der bei Bestrahlung mit Anregungslicht Licht im Nahinfrarotbereich emittiert, aufweist. Der Lumineszenzstandard enthält Bismut als Lumineszenzemitter in einem anorganischen Matrixmaterial wie beispielsweise Glas. Bei dem Kalibriermedium beträgt der Anteil des Lumineszenzstandards, wenn er in das Volumen des Trägermaterials inkorporiert ist, etwa 1 bis 20 Gew.-% des Trägermaterials, und wenn er an der Oberfläche des Trägermaterials konzentriert vorliegt, etwa 1 bis 10 Gew.-% des Trägermaterials. Die räumliche Homogenität des Messsignals, ausgedrückt als Standardabweichung in % des Mittelwerts bei Messung der Intensität des Spektrums an 2400 unterschiedlichen Stellen einer Größe von 1 mm², beträgt 7%.

Das in DE 10 2011118 057 A1 beschriebene Kalibriermedium erlaubt durch seine besonders breite Lumineszenz eine gleichzeitige Kalibrierung einer Vielzahl spektraler Kanäle eines Sensors. Es ist jedoch nicht gut geeignet für Mehrspursensoren, d.h. für Sensoren, die die gesamte Breite oder zumindest einen wesentlichen Teil der Breite eines an ihnen vorbeitransportierten Wertdokuments abdecken. Die Kalibrierung von Mehrspursensoren erfordert eine besonders hohe räumliche Homogenität des Messsignals des Kalibriermediums, d.h. eine auf allen Messspuren möglichst identische Signalstärke, um alle Sensorelemente übereinstimmend kalibrieren zu können. Hierfür ist eine geringere Standardabweichung als 7% des Mittelwerts bei einer Messfleckgröße von 1 mm² wünschenswert.

Außerdem ist dieses Kalibriermedium nicht geeignet für solche Sensoren, zu deren Kalibrierung derselbe Merkmalsstoff verwendet werden muss, der auch zur Echtheitssicherung derjenigen Wertdokumente eingesetzt wird, zu deren Prüfung der betreffende Sensor kalibriert wird. Dass für das Kalibriermedium der Merkmalsstoff der Wertdokumente verwendet werden muss ist beispielsweise nötig, wenn auch der Spektralverlauf oder die Abklingzeiten einer Lumineszenzemission bei der Kalibrierung berücksichtigt werden müssen.

Zur Echtheitssicherung von Wertdokumenten mittels lumineszierender Merkmalsstoffe werden häufig besonders stark lumineszierende Substanzen ausgewählt, da diese Substanzen noch in Konzentrationen, die für eine Identifizierung durch chemische Analyse nicht ausreichend sind, ohne weiteres detektiert werden können. Die geringe Konzentration wird also als Mittel zur Fälschungssicherung genutzt. Ein Sensor zur Prüfung derartiger Echtheitsmerkmale von Wertdokumenten sollte mit einem Kalibriermedium kalibriert werden, das den Merkmalsstoff in einer ähnlich geringen Konzentration aufweist wie das zu prüfende Wertdokument. Generell gilt aber, dass es umso schwieriger wird, bei einem Kalibriermedium eine räumlich homogene Signalintensität zu erreichen, je geringer die Konzentration des Merkmalsstoffs in dem Kalibriermedium ist. Eine starke Erhöhung der Konzentration des Merkmalsstoffs im Kalibriermedium gegenüber der Applikation im Wertdokument ist jedoch aus technischen Gründen im Normalfall nicht möglich bzw. unvorteilhaft (z.B. wegen Nichtlinearitäten oder einer Übersteuerung bzw. Sättigung des Detektorsystems etc.). Kalibriermedien mit einer Konzentration an stark lumineszierenden Merkmalsstoffen, die in der Größenordnung liegt, in der die stark lumineszierenden Merkmalsstoffe zur Echtheitssicherung von Wertdokumenten eingesetzt werden, und gleichzeitig eine räumlich sehr homogene Lumineszenzintensität aufweisen, sind im Stand der Technik nicht bekannt.

Aufgabe der vorliegenden Erfindung ist es, die Nachteile des Stands der Technik zu überwinden und ein Kalibriermedium zum Kalibrieren eines Sensors bereitzustellen, der zur Prüfung mindestens einer optischen Eigenschaft von Wertdokumenten ausgebildet ist, wobei das Kalibriermedium zur Kalibrierung von Mehrspursensoren geeignet sein soll.

Das Kalibriermedium soll eine hohe räumliche Homogenität der detektierbaren Intensität der optischen Eigenschaft selbst dann aufweisen, wenn der Merkmalsstoff in dem Kalibriermedium in einer so geringen Konzentration enthalten ist, in der der betreffende Merkmalsstoff in Wertdokumenten zur Echtheitskennzeichnung verwendet wird, oder in einer Konzentration, die bis zu einem Faktor 5 über dieser Konzentration liegt. Das Kalibriermedium enthält den Merkmalsstoff mit einem Flächengewicht von weniger als 2500 mg pro m² Kalibriermedium, bevorzugt von weniger als 1500 mg Merkmalsstoff pro m² Kalibriermedium, besonders bevorzugt von weniger als 300 mg Merkmalsstoff pro m² Kalibriermedium. Bei besonders effizienten Merkmalsstoffen können auch weniger als 100 mg Merkmalsstoff pro m² Kalibriermedium verwendet werden.

Lumineszenzstoffe werden in Wertdokumenten zur Echtheitskennzeichnung in einer Konzentration in der Größenordnung von 0,01 Gew.% bis 0,1 Gew. % des Gesamt-Wertdokumentmaterials verwendet. Das Kalibriermedium soll daher eine hohe räumliche Homogenität der detektierbaren Lumineszenzintensität aufweisen, wenn der Lumineszenzstoff in einer Konzentration von 0,5 Gew. % oder weniger, bevorzugt von 0,1 Gew. % oder weniger des Kalibriermediums vorliegt. In diesem Fall besitzen Kalibriermedium und Wertdokument auch vergleichbare Flächengewichte an Merkmalsstoff.

Für die Zwecke der vorliegenden Erfindung bedeutet der Begriff "hohe räumliche Homogenität", dass die Standardabweichung der Intensität des Messsignals, beispielsweise der Lumineszenzintensität, weniger als 5%, bevorzugt weniger als 3%, des Mittelwerts der Intensität des Messsignals beträgt, falls Messpunkte der Größe 1 mm² betrachtet werden. Werden entsprechend größere oder kleinere Messpunkte gewählt, verändert sich, bei entsprechender Homogenität auf makroskopischen Dimensionen größer als der Messfleck, die Standardabweichung entsprechend zur Wurzel der Messfleckfläche. Bei Verwendung eines Messflecks der Größe 100 mm² kann mit den erfindungsgemäßen Kalibrierbelegen daher z.B. eine Standardabweichung der Intensität des Messsignals von weniger als 0,5%, bevorzugt weniger als 0,3% des Mittelwerts der Intensität des Messsignals erhalten werden.

Insbesondere ist die räumliche Homogenität des Messsignals des Kalibriermediums so groß, dass das Verhältnis aus der Standardabweichung zum Mittelwert der Intensität des Messsignals kleiner ist als 5% geteilt durch die Wurzel der in Quadratmillimetern angegebenen Messfleckfläche, bevorzugt weniger als 3% geteilt durch die Wurzel der in Quadratmillimetern angegebenen Messfleckfläche. Selbst wenn die Messsignalintensität an Messpunkten der Größe 1 mm² detektiert wird, beträgt die Standardabweichung der detektierten Intensität, über die gesamte Fläche der Merkmalsstoffschicht auf dem Kalibriermedium hinweg, daher weniger als 5%, bevorzugt weniger als 3%, des Mittelwerts der Messsignalintensität.

Der Merkmalsstoff ist vorzugsweise derart räumlich homogen über das Kalibriermedium verteilt, dass die von dem Sensor detektierte Messsignalintensität, über die gesamte Fläche der Merkmalsstoffschicht auf dem Kalibriermedium hinweg, selbst wenn die Messsignalintensität an Messpunkten der Größe 1 mm² detektiert wird, eine Standardabweichung von weniger als 5%, bevorzugt weniger als 3%, des Mittelwerts der Messsignalintensität aufweist.

Aufgabe der vorliegenden Erfindung ist es auch, ein Verfahren zur Herstellung eines derartigen Kalibriermediums anzugeben.

Aufgabe der vorliegenden Erfindung ist es ferner, ein Verfahren zum Kalibrieren eines Sensors, insbesondere eines Mehrspursensors, der zur Prüfung mindestens einer optischen Eigenschaft von Wertdokumenten ausgebildet ist, bereitzustellen. Insbesondere handelt es sich bei der mindestens einen optischen Eigenschaft um die Lumineszenzintensität des durch den Sensor angeregten Wertdokuments innerhalb eines bestimmten Spektralbereichs.

Die Aufgabe wird gelöst durch das Kalibriermedium, das Verfahren zur Herstellung eines Kalibriermediums, und das Verfahren zum Kalibieren eines Sensors, jeweils mit den Merkmalen, wie sie in den unabhängigen Ansprüchen angegeben sind. Ausführungsformen der Erfindung sind in den jeweiligen abhängigen Ansprüchen angegeben.

Das erfindungsgemäße Kalibiermedium zum Kalibrieren eines Sensors, der zur Prüfung mindestens einer optischen Eigenschaft von Wertdokumenten ausgebildet ist, weist mindestens eine Merkmalsstoffschicht und mindestens eine Stützschicht für die Merkmalsstoffschicht auf. Die Merkmalsstoffschicht ist eine Lackschicht, in welcher der Merkmalsstoff in Form von Partikeln dispergiert ist, wobei der Merkmalsstoff ein zur Echtheitssicherung von Wertdokumenten geeigneter Merkmalsstoff ist, eine Partikelgröße D99 von unter 10 µm, bevorzugt von unter 5 µm aufweist und mit einem Flächengewicht von weniger als 2500 mg pro m² Kalibriermedium vorliegt. Bevorzugt weist der Merkmalsstoff eine Partikelgröße D99 von über 1 µm auf, um eine Agglomeration der Partikel im Lack zu vermeiden und die Dispergierung zu erleichtern.

Der Merkmalsstoff ist bevorzugt ein Lumineszenzstoff, besonders bevorzugt ein Lumineszenzstoff mit einer oder mehrerer Emissionen im Nahinfrarotbereich.

Das Kalibriermedium ist erhältlich durch Zerkleinern des Merkmalsstoffs zu Partikeln einer Partikelgröße D99 unter 10 µm, bevorzugt unter 5 µm, Bereitstellen eines Lacks, der mindestens ein Bindemittel und bevorzugt ein Netzmittel enthält, Herstellen eines Merkmalsstoff-Lacks durch Dispergieren der Merkmalsstoffpartikel in dem Lack (möglichst unter Vermeidung einer Agglomeration der Merkmalsstoffpartikel), Auftragen des Merkmalsstoff-Lacks auf mindestens eine Oberfläche einer Stützschicht, und Trocknen lassen und/oder Härten und/oder Polymerisieren des Merkmalsstoff-Lacks unter Erzeugung der Merkmalsstoffschicht.

Das nach dem erfindungsgemäßen Verfahren hergestellte Kalibriermedium weist eine hohe räumliche Homogenität des Messsignals auf, d.h. eine sehr geringe Standardabweichung der Messsignalintensität von weniger als 5 % des Mittelwerts der Messsignalintensität bei Betrachten von Messpunkten der Größe 1 mm². Es ist geeignet zur Kalibrierung von Sensoren nach an sich bekannten Kalibrierverfahren, verwendet zur Kalibrierung jedoch keine Standardsubstanz, sondern speziell die zur Echtheitskennzeichnung verwendeten Merkmalsstoffe.

Die von dem Sensor detektierte Messsignalintensität in der mindestens einen Merkmalsstoffschicht weist insbesondere eine von der Größe des Messflecks abhängige Standardabweichung von weniger als 5% geteilt durch die Wurzel der Messfleckfläche in Quadratmillimetern, bevorzugt weniger als 3% geteilt durch die Wurzel der Messfleckfläche in Quadratmillimetern, des Mittelwerts der Messsignalintensität auf.

Die Erfindung wird im Folgenden anhand von Lumineszenzstoffen als Merkmalsstoffe beschrieben. Lumineszenzstoffe, insbesondere Lumineszenzstoffe mit Emissionen im Nahinfrarotbereich, stellen bevorzugte Merkmalsstoffe dar. Es wird jedoch betont, dass in völlig analoger Weise andere Merkmalsstoffe eingesetzt werden können, beispielsweise Absorbersubstanzen zur Kalibrierung von Sensoren, die das Absorptionsverhalten von in bestimmten Wellenlängenbereichen absorbierenden Merkmalsstoffen prüfen.

Das Kalibriermedium besteht aus mindestens zwei Schichten, einer Lackschicht, in der der Lumineszenzstoff homogen verteilt ist, und einer Stützschicht für die Lackschicht. Die Stützschicht enthält keinen Lumineszenzstoff, weshalb die Konzentration des Lumineszenzstoffs in dem Kalibriermedium insgesamt wesentlich geringer ist als die Konzentration des Lumineszenzstoffs in der Lackschicht alleine. Überdies ist die Stützschicht in der Regel deutlich dicker als die Lackschicht, d.h. der Anteil der Stützschicht an dem Kalibriermedium ist größer als der Anteil der Lackschicht, sodass die bei Wertdokumenten üblichen geringen Lumineszenzstoff-Konzentrationen von 0,01 Gew. % bis 0,1 Gew. % erreicht werden können, wenn der Anteil des Lumineszenzstoffs in der Lackschicht maximal 5 Gew. % beträgt.

Die Stützschicht des Kalibriermediums besteht aus einem Kunststoff oder aus Papier. Papier ist jedoch weniger bevorzugt, da es bei Papier schwieriger ist als bei Kunststoff, eine sehr glatte Grenzfläche zwischen Stützschicht und Lackschicht zu erzielen. Eine glatte Grenzfläche fördert die Homogenität des Kalibriermediums. Bevorzugt besteht die Stützschicht aus einem organischen Polymer, beispielsweise aus Polyethylen, Polypropylen, Polystyrol oder einem Polyester wie einem Polycarbonat oder Polyethylenterephthalat (PET). Besonders bevorzugt ist PET. Die Dicke der Stützschicht liegt üblicherweise zwischen 50 und 300 µm, bevorzugt zwischen 150 und 200 µm, besonders bevorzugt zwischen 180 und 200 µm. Die Stützschicht ist bevorzugt opak, besonders bevorzugt opak weiß, wobei "weiß" in diesem Zusammenhang insbesondere bedeuten soll, dass die Stützschicht bei den verwendeten Anregungs- und Emissionswellenlängen stark streuend ist.

Die Lumineszenzstoffschicht, d.h. die Lackschicht mit darin dispergiertem Lumineszenzstoff, befindet sich auf einer oder auf beiden Oberflächen der Stützschicht. Sie kann die Oberflächen jeweils vollflächig oder teilflächig bedecken und kontinuierlich oder unterbrochen, beispielsweise strukturiert sein.

Die Lumineszenzstoffschicht kann auch von einer Schutzschicht bedeckt sein, wobei die Schutzschicht gleichzeitig als Stützschicht dienen kann. Beispielsweise kann die Lumineszenzstoffschicht zwischen zwei Schichten (Schutzschicht und Stützschicht) eingeschlossen sein. Gemäß einer anderen Ausführungsform kann eine Stützschicht an beiden Oberflächen von Lumineszenzstoffschichten bedeckt sein, wobei jede Lumineszenzstoffschicht wiederum von einer Schutzschicht bedeckt ist.

Für Schutzschichten sind dieselben Materialien geeignet wie für Stützschichten, wobei die Materialien der Schutzschichten selbstverständlich für die Wellenlänge der Anregungsstrahlung sowie die Wellenlänge der Emissionsstrahlung ausreichend lichtdurchlässig sein müssen.

Bei Kalibriermedien, die neben der Stützschicht auch über mindestens eine Schutzschicht verfügen, kann die Stützschicht dünner sein als bei Kalibriermedien ohne Schutzschicht(en).

Die erfindungsgemäßen Kalibriermedien können einzeln hergestellt werden, oder in Form von Bahnen oder Bögen, die eine Vielzahl von Kalibriermedien aufweisen. Die Einzel-Kalibriermedien (Kalibrierbelege) werden dann von der Bahn oder dem Bogen abgetrennt, beispielsweise ausgeschnitten oder ausgestanzt. Bevorzugt weisen die Kalibrierbelege eine geeignete Größe für den Transport durch die Rollen einer typischen Banknotenbearbeitungsmaschine auf, beispielsweise eine Größe von 90 x 180 mm². Alternativ können die Kalibriermedien auch eine andere, beispielsweise geringere, Größe haben und zur Herstellung eines Kalibrierbelegs auf einem Blatt aus Papier oder Kunststoff einer geeigneten Größe befestigt werden.

Die verwendbaren Lumineszenzstoffe (Merkmalsstoffe) sind in keiner Weise beschränkt. Grundsätzlich kann für jeden festen Lumineszenzstoff, der zur Echtheitssicherung von Wertdokumenten geeignet ist, ein erfindungsgemäßes Kalibriermedium hergestellt werden. Vorteilhaft ist, wenn sich die Lumineszenzstoffe problemlos auf kleine Partikelgrößen zerkleinern lassen. Beispiele für geeignete Lumineszenzstoffe sind beschrieben in den Druckschriften WO 81/03507 und WO 81/03510. Dabei handelt es sich um Wertdokument-Merkmalsstoffe auf der Basis von Wirtsgittern, die mit Lumineszenzaktivatoren wie Seltenerdmetallen dotiert sind. Die Wirtsgitter sind bei den genannten Druckschriften bevorzugt Granate und Perowskite, aber es sind auch andere Wirtsgitter und Lumineszenzaktivatoren geeignet. Die Anregung der Lumineszenzstoffe kann im sichtbaren oder unsichtbaren Wellenlängenbereich erfolgen, und auch die Lumineszenzemission kann sowohl im sichtbaren als auch im unsichtbaren Wellenlängenbereich (Infrarot, Ultraviolett) liegen. Bevorzugt liegt die Lumineszenzemission im unsichtbaren Wellenlängenbereich.

Die erfindungsgemäßen Kalibriermedien bzw. ihre Herstellungsweise ist auch gleichermaßen geeignet für Merkmalsstoffe, deren Emissionen zur Echtheitskennzeichnung genutzt werden, wie für Merkmalsstoffe, deren Absorptionseigenschaften zur Echtheitskennzeichnung genutzt werden. Bevorzugte Merkmalsstoffe sind Lumineszenzstoffe mit Emissionen im nahen IR-Bereich bis zu einer Wellenlänge von 3 µm.

Sicherheitsmerkmale von Wertdokumenten enthalten oft mehrere verschiedene Lumineszenz-Merkmalsstoffe. Um Sensoren zur Prüfung derartiger Wertdokumente vorteilhaft kalibrieren zu können, enthalten die Kalibriermedien der vorliegenden Erfindung gemäß einer Ausführungsform mehrere Lumineszenz-Merkmalsstoffe, die einzeln in verschiedenen Bereichen eines Kalibriermediums oder im Gemisch miteinander vorliegen können. So können die erfindungsgemäßen Kalibriermedien jeweils an bestimmte Wertdokumente angepasst werden, bzw. für eine Kalibrierung von Sensoren zur Prüfung bestimmter Wertdokumente maßgeschneidert werden.

Der Lumineszenzstoff oder ein Gemisch von Lumineszenzstoffen liegt in Form kleiner Partikel vor, die in einer Lackschicht homogen verteilt sind. Lacke im Sinne der vorliegenden Erfindung sind Substanzen und Zusammensetzungen, die in einer dünnen Schicht auf eine Oberfläche eines Trägermaterials aufgetragen werden können und durch chemische Reaktion und/oder physikalische Veränderung auf der Oberfläche des Trägermaterials einen haftenden festen Film bilden. Die Lacke müssen flüssig sein oder in einen flüssigen Zustand gebracht werden können, beispielsweise durch Lösen in einem Lösungsmittel oder durch Erwärmen.

Die Hauptkomponente der Lacke, d.h. der Bestandteil, der in Gewichtsprozent den relativ größten Anteil an der Gesamtzusammensetzung hat, ist das Bindemittel. Weitere Bestandteile sind gegebenenfalls Lösungsmittel, Füllstoffe und Lackhilfsmittel.

Abhängig vom Bindemittel kann es sich bei den erfindungsgemäß zu verwendenden Lacken handeln um physikalisch trocknende Lacke, d.h. Lacke, die rein physikalisch durch Verdunsten des Lösungsmittels oder durch Wegschlagen des Lösungsmittels in das Trägermaterial fest werden, um chemisch trocknende Lacke, d.h. Lacke, die an Luft (Luftsauerstoff) Vernetzungsreaktionen eingehen, oder um Lacke, die bei Aktivierung, beispielsweise durch Wärme oder Strahlung (Licht, ionisierende Strahlung), einer Polyreaktion unterliegen und zu einem Polymermaterial aushärten.

Bei der Polyreaktion kann es sich um eine Polymerisation, eine Polyaddition oder eine Polykondensation handeln. Bevorzugt sind strahlenhärtende Lacke, besonders bevorzugt durch UV-Strahlung härtende Lacke. Die photochemisch härtenden Lacke, also die durch Lichtstrahlung (typischerweise mit einer Wellenlänge von ca. 200 bis 700 nm) härtenden Lacke enthalten als Bindemittel Monomere und/oder Oligomere und/oder vernetzbare Gruppen aufweisende Polymere. Die lichtinduzierten Polyreaktionen verlaufen nach radikalischen, kationischen oder anionischen Mechanismen. Zur Initiierung der Polyreaktion enthalten die photochemisch zu einem Polymermaterial aushärtenden Lacke einen geeigneten Photoinitiator. Außerdem enthalten die Lacke bevorzugt einen Reaktivverdünner, das heißt ein an der Polyreaktion teilnehmendes Verdünnungsmittel.

Die verwendete Lackformulierung kann zusätzlich zu den oben beschriebenen Komponenten Füllstoffe enthalten, beispielsweise anorganische Füllstoffe wie Bariumsulfat, Aluminosilikate wie z.B. Kaolin, Glimmer oder Feldspate, Calciumcarbonat, Dolomit, Talkum, Quarz, Cristobalit, Kieselgur, sonstige Silikate oder Titandioxid. Werden Füllstoffe eingesetzt, so enthält die Formulierung maximal bis zu 15 Gew.-% Füllstoffe, bevorzugt aber nicht mehr als 10 Gew.-% Füllstoff, besonders bevorzugt 2 bis 5 Gew.-% Füllstoff. In einer bevorzugten Ausführungsform besteht der Füllstoff aus nanoskaligem Titandioxid. Bei der Wahl der Füllstoffe ist darauf zu achten, dass sich der Absorptionsbereich des verwendeten Photoinitiators nicht mit dem Absorptionsbereich des Füllstoffs überschneidet, so dass die photoinitiierte Polymerisation durch den Füllstoff nicht behindert oder verhindert wird.

Im Übrigen kann der Lack übliche Zusatzstoffe wie Additive zur Viskositätskontrolle, Entschäumer, Dispergierhilfsmittel und sonstige lackübliche Zusätze enthalten.

Bevorzugt wird ein lösemittelfreier UV-Lack (100%-System) verwendet, aber auch UV-härtende Lacke, die ein organisches oder wässriges Lösungsmittel enthalten, sind gut geeignet.

Die erfindungsgemäß zu verwendenden Lacke, Photoinitiatoren und gegebenenfalls Zusatzstoffe sind handelsübliche Produkte. Für die Zwecke der vorliegenden Erfindung vorteilhaft ist, dass die Lackformulierung ein Netzmittel enthält, bzw. dem verwendeten Lack ein Netzmittel zugesetzt wird. Das Netzmittel verringert die Oberflächenspannung des Lacks und verbessert dadurch die Benetzung der Oberfläche, auf die der Lack aufgetragen wird. Die so erhaltene besonders glatte Oberfläche leistet einen wichtigen Beitrag zur Erzielung einer hohen Homogenität des Kalibriermediums im gesamten Beschichtungsbereich, und damit zu einer hohen räumlichen Homogenität des detektierten Lumineszenzsignals im gesamten Beschichtungsbereich. Die Menge des Netzmittels liegt üblicherweise zwischen 1 bis 5 Gew.-% der Lackformulierung.

Zur Verbesserung der Homogenität kann - alternativ oder zusätzlich zur Verwendung eines Netzmittels in der Merkmalsstoffschicht - die Stützschicht, vor dem Aufbringen der Merkmalsstoffschicht, mit einem Haftvermittler versehen werden, welcher die Oberflächenspannung an der Grenzfläche zwischen Lack und Folie herabsetzt.

Im Folgenden werden beispielhafte Komponenten und Zusammensetzungen für erfindungsgemäß bevorzugte UV-Lacke angegeben.

Bevorzugt enthalten die UV-Lacke, bezogen auf das Gewicht des Lacks, 25 bis 95 Gew.-% Bindemittel (wie oligomere Bindemittelharze), 0 bis 60 Gew.-% Reaktivverdünner (wie reaktive Monomere), 1 bis 5 Gew.-% Photoinitiator(en), und 1 bis 5 Gew.-% Netzmittel, und optional weitere Komponenten wie Lösungsmittel, Füllstoffe und sonstige lackübliche Additive. Es versteht sich, dass sich die Komponenten jeweils zu 100 Gew.-% ergänzen. Das Bindemittel besteht bevorzugt aus Harzen und/oder organischen Oligomeren, besonders bevorzugt aus Acrylaten, Epoxiden, Enolethern, cyclischen Aminen oder Kombinationen davon. Der Reaktivverdünner besteht bevorzugt aus mono- oder polyfunktionellen Acrylaten oder Kombinationen davon. Als Photoinitiatoren werden bevorzugt nichtspaltbare Initiatoren oder auch alpha-Starter verwendet. Besonders bevorzugt sind Hydroxyalkylketone und Acylphosphinoxide. Ein besonders bevorzugtes Netzmittel (Additiv zur Verbesserung der Benetzung der Oberfläche der Stützschicht) ist das Silikon-Additiv BYK UV 3500 (Altana).

Der zur Kalibrierung zu verwendende Lumineszenzstoff oder sonstige Merkmalsstoff wird in dem flüssigen Lack homogen dispergiert. Dabei ist es bevorzugt, sehr kleine Lumineszenzstoffpartikel zu verwenden und eine Agglomeration der Partikel in dem Lumineszenzstoff-Lack (Lackformulierung mit darin dispergiertem Lumineszenzstoff) zu vermeiden. Beide Maßnahmen leisten, für sich genommen, einen wichtigen Beitrag zur Erzielung einer hohen Homogenität des Kalibriermediums, d.h. einer räumlichen Homogenität des Lumineszenzmesssignals im gesamten beschichteten Bereich. Beide Maßnahmen wirken überdies in vorteilhafter Weise zusammen und ermöglichen die Herstellung eines Kalibriermediums mit extrem geringer Standardabweichung der Lumineszenzintensität.

Die geringe Standardabweichung kann trotz der sehr geringen Konzentration des Lumineszenzstoffs in dem Kalibriermedium erhalten werden.

Die Konzentration des Lumineszenzstoffs in der Lumineszenzstoffschicht (bestehend aus Lack und Lumineszenzstoff, d.h. ohne Berücksichtigung von Stützschicht und/oder Schutzschichten) liegt bevorzugt bei 0,005 bis 5,0 Gew.-%, besonders bevorzugt bei 0,02 bis 2,0 Gew.-%, ganz besonders bevorzugt bei 0,05 bis 0,5 Gew.-%.

Betrachtet man nicht nur die Lumineszenzstoffschicht, sondern das Kalibriermedium insgesamt, bzw. bei teilflächiger Beschichtung den beschichteten Abschnitt des Kalibriermediums, ergibt sich typischerweise ein Lumineszenzstoff-Anteil von weniger als 0,1 Gew.-%. Dies ist der Bereich, in dem stark lumineszierende Lumineszenz-Merkmalsstoffe zur Echtheitssicherung von Wertdokumenten verwendet werden. Werden mehrere unterschiedliche lumineszierende Merkmalsstoffe in den Kalibrierbeleg eingeführt, z.B. um mit einem einzigen Kalibrierbeleg mehrere Sensorplattformen abzudecken, so bezieht sich der bevorzugte Anteil von weniger als 0,1 Gew.-% nur auf den Anteil jeweils eines einzelnen Lumineszenzstoffs.

Die Lumineszenzstoffe sollten bevorzugt auf eine mittlere Korngröße D99 < 10 µm, besonders bevorzugt < 5 µm zerkleinert, beispielsweise vermahlen, werden. Besonders bevorzugt ist eine Zerkleinerung auf eine mittlere Korngröße D99 < 3 µm. Eine Korngröße D99 < 5 µm bedeutet, dass 99% des Volumens einer Korngrößenverteilung von Partikeln mit einem Durchmesser kleiner 5 µm gebildet werden.

Diese Korngröße liegt deutlich unterhalb der Korngröße, die Lumineszenzstoff-Partikel in Wertdokumenten wie Banknoten bei Einbettung in der Papiermasse normalerweise aufweisen. Obwohl die Herstellung kleinerer Korngrößen unter 5 µm durchaus bekannt und möglich ist - beispielsweise für Druckapplikationen, zur besseren Verarbeitbarkeit in weiteren Verfahrensschritten wie Harzummantelungen der Partikel, oder im Falle von speziellen hochabsorbierenden und damit in ihrer Lumineszenzintensität relativ größenunabhängigen übergangsmetallhaltigen Spezialpigmenten - werden, aufgrund der deutlich höheren Leuchteffizienz größerer Partikel, in Wertdokumenten typischerweise Merkmalsstoffe mit Korngrößen D99 über 10 µm eingesetzt. Daher werden zur Herstellung der erfindungsgemäßen, besonders homogenen Kalibriermedien die normalerweise verwendeten Merkmalsstoffe durch geeignete Mahltechniken nachbearbeitet.

Um im gesamten beschichteten Bereich eine räumliche Homogenität des Lumineszenz-Messsignals zu erhalten, müssen die Lumineszenzstoffpartikel in dem Lack sehr homogen verteilt vorliegen. Beim Einbringen der Partikel in den Lack sollte daher dafür gesorgt werden, dass diese nach Möglichkeit nicht agglomerieren.

Eine geeignete Maßnahme zur Vermeidung bzw. Verringerung einer Agglomeration der Lumineszenzstoffpartikel ist beispielsweise die Verwendung einer Dissolverscheibe beim Einbringen der Lumineszenzstoffpartikel, und gegebenenfalls der Zusatzstoffe, in den Lack. Die Anzahl an Agglomeraten aufgrund einer unvollständigen Dispergierung kann dabei jedoch noch unvorteilhaft hoch sein. Bevorzugt ist es daher, die Lumineszenzstoffpartikel zusammen mit dem Lack und den Additiven in einer Schwingkugelmühle zu behandeln. Besonders bevorzugt ist die Behandlung in einer Schwingkugelmühle für eine Zeitdauer von etwa 10 min. bei einer Schwingfrequenz von etwa 20 Hertz. Durch diese Behandlung wird eine besonders gute Dispergierung erreicht, welche zu der erfindungsgemäß hohen räumlichen Homogenität des Messsignals führt oder zumindest wesentlich beiträgt.

Um ein Absetzen der Partikel und dadurch einsetzende Agglomeration nach längeren Standzeiten zu verhindern, kann zusätzlich ein tensidbasiertes Dispergiermittel eingesetzt werden. Bevorzugt wird jedoch ein Absetzen während Standzeiten und während des Aufrakelns durch Wahl eines hochviskosen Lacks vermieden. Bei ungenügend hoher Viskosität des Lacks kann ein Absinken der Partikel z.B. während der Aufbringung auf das Spiralrakel, zu einer inhomogenen Verteilung bzw. einem Gradienten in der Partikelkonzentration der aufgerakelten Schicht führen. Bevorzugt werden Lacke mit einer Viskosität (bei 20 °C) von mindestens 200 mPas, besonders bevorzugt von mindestens 2500 mPas eingesetzt.

Zur Herstellung eines erfindungsgemäßen Kalibriermediums wird der Lumineszenzstoff-Lack auf eine Stützschicht aufgetragen, bevorzugt auf eine Stützschicht, die mechanisch so stabil ist, dass das Kalibriermedium durch eine Blattgutbearbeitungsmaschine, in der der zu kalibrierende Sensor enthalten ist, hindurchgeführt werden kann. Bei dem für die Stützschicht verwendeten Material handelt es sich gemäß einer besonders bevorzugten Ausführungsform um PET.

Zur Verbesserung der Haftung des Lumineszenzstoff-Lacks an der Stützschicht ist es bevorzugt, die zu beschichtende Oberfläche der Stützschicht mit einem Haftvermittler oder einer Grundierung vorzubehandeln. Besonders bevorzugt sind Haftvermittler auf Polyesterbasis oder Polyethyleniminbasis.

Die Auftragung des Lumineszenzstoff-Lacks kann grundsätzlich durch bekannte Verfahren zur Auftragung flüssiger Formulierungen, wie Streichen, Rollen, Sprühen oder Rakeln erfolgen. Die bevorzugte Auftragungsform ist mittels Rakeln, besonders bevorzugt mittels eines Spiralrakels. Die Verwendung eines Spiralrakels ermöglicht eine besonders homogene Dickenverteilung auf der gesamten lackierten Fläche, und damit, in Kombination mit der homogenen Verteilung der Lumineszenzstoffpartikel im Lack, eine sehr homogene Lumineszenzstoffverteilung auf der gesamten lackierten Fläche.

Die Dicke der aufgebrachten Schicht aus Lumineszenzstoff-Lack (Nassfilmstärke) liegt bevorzugt zwischen 10 und 100 µm, besonders bevorzugt zwischen 20 und 60 µm.

Anschließend wird die Schicht aus Lumineszenzstoff-Lack in den festen Zustand überführt. Die zur Überführung in den festen Zustand erforderlichen Maßnahmen sind abhängig von der Art des verwendeten Lacks. Physikalisch trocknende Lacke erhärten von selbst durch Zeitablauf, gegebenenfalls unterstützt durch leichtes Erwärmen und/oder Überstreichen mit trockener Luft. Analoges gilt für lufttrocknende Lacke. Wärmehärtende Lacke werden zur Härtung erhitzt. Strahlenpolymerisierbare und strahlenhärtende Lacke, d.h. photochemisch oder durch ionisierende Strahlung härtende Lacke, werden mit der entsprechenden Strahlung bestrahlt. Die erfindungsgemäß besonders bevorzugten UV-härtenden Lacke werden durch Bestrahlung mit UV-Licht ausgehärtet. Dazu werden bevorzugt kommerzielle UV-Bandtrockner mit einer breitbandigen UVC- oder UVB-Quelle verwendet.

Die auf diese Weise hergestellten erfindungsgemäßen Kalibriermedien weisen, selbst bei sehr geringen Gewichtsanteilen des Merkmalsstoffs am Kalibriermedium, noch besonders hohe räumliche Homogenitäten des Lumineszenzsignals auf. Die erfindungsgemäßen Kalibriermedien haben bevorzugt Gewichtsanteile des Lumineszenzstoffs am Kalibriermedium (Lumineszenzstoffschicht und Stützschicht und gegebenenfalls Schutzschicht in Kombination) von unter 0,1 Gew.%. Verglichen mit den höheren Beladungen von 1 bis 10 Gew.% der Kalibriermedien aus dem Stand der Technik (DE 10 2011 118 057 A1) wären daher deutlich höhere Schwankungen des Messsignals zu erwarten. Die erfindungsgemäßen Kalibriermedien weisen jedoch, im Gegenteil, geringere Schwankungen des Messsignals auf. Verantwortlich für die hohe räumliche Homogenität des Messsignals ist die erfindungsgemäße Herstellungsweise des Kalibriermediums, bei der die Korngröße des Merkmalsstoffs reduziert wird auf D99 < 10 µm, bevorzugt < 5 µm, besonders bevorzugt < 3 µm. Zudem wird bei der Einmischung der Merkmalsstoffpartikel in den Lack eine Agglomeration der Partikel vermieden, z.B. durch Dispergieren mittels einer Schwingkugelmühle oder dadurch, dass dem Lack ein Netzmittel zur besseren Oberflächenbenetzung zugesetzt wird.

Ist der Merkmalsstoff ein Lumineszenzstoff, erhält man erfindungsgemäß ein Kalibriermedium, bei dem die Standardabweichung vom Mittelwert des Lumineszenzsignals bei 2400 Messpunkten der Messfleckgröße 1 mm² zumindest weniger als 5 %, bevorzugt weniger als 3%, beträgt. Werden entlang des Kalibriermediums, d.h. über seine Breite hinweg, mehrere einzelne Messspuren durch einen Sensor erfasst, so beträgt die Abweichung des gemittelten Messsignals zwischen einzelnen Spuren weniger als 2%, bevorzugt weniger als 1%.

Bei den Lumineszenzstoffpartikeln kann es sich um Partikel eines einzigen Lumineszenzstoffs oder um Partikel eines Gemisches verschiedener Lumineszenzstoffe handeln. Es ist auch möglich, Merkmalsstoffe verschiedener Art miteinander zu mischen, beispielsweise Lumineszenzpigmente und Absorberpigmente. Die Art der Merkmalsstoffe, die ein erfindungsgemäßes Kalibriermedium enthält, richtet sich nach der Art der Merkmalsstoffe, die in dem Wertdokument enthalten sind, für deren Prüfung ein Sensor kalibriert werden soll. Kennzeichnend für die erfindungsgemäßen Kalibriermedien ist daher unter anderem, dass sie jeweils genau dieselben Merkmalsstoffe enthalten, und bevorzugt auch in vergleichbaren Konzentrationen, wie sie in den zu prüfenden Wertdokumenten zur Echtheitssicherung eingesetzt werden. Mit "vergleichbaren Konzentrationen" ist dabei gemeint, dass die im Kalibriermedium enthaltene Konzentration an Merkmalsstoff die entsprechende im Wertdokument enthaltene Konzentration des gleichen Merkmalsstoff bevorzugt nicht um mehr als einen Faktor 5 überschreitet.

Gemäß einer vorteilhaften Ausführungsform der vorliegenden Erfindung ist die Stützschicht beidseitig mit einer Merkmalsstoffschicht beschichtet. Die beidseitige Beschichtung erlaubt die beidseitige Messung des Kalibrierbelegs, beispielsweise durch gegenüberliegende Sensoren innerhalb einer Banknotenbearbeitungsmaschine.

Am Kalibriermedium kann ein RFID-Chip angebracht sein, um beispielsweise bestimmte Daten zu speichern. Solche Daten beinhalten beispielsweise die zu erwartende Intensität des Messsignals am Sensor oder einen oder mehrere Übertragungsfaktoren, um die am Kalibriermedium gemessenen Werte auf die bei der Wertdokumentapplikation zu erwartenden Werte umzurechnen. Bevorzugt werden solche Daten auf dem RFID-Chip in verschlüsselter Form gespeichert.

Alternativ oder zusätzlich kann ein Aufkleber mit aufgedruckten Informationen, beispielsweise Seriennummern, Prüfplaketten, maschinellen Erkennungsmustern, QR-Codes, der korrekten Einlegerichtung/Bedienweise des Kalibriermediums, und beliebigen anderen Informationen auf dem Kalibriermedium aufgeklebt sein.

Das Kalibriermedium kann auch zum Schutz vor Verschmutzung und mechanischer Beschädigung in einer Schutzfolie eingeschweißt sein. Es versteht sich, dass derartige Schutzfolien so ausgewählt werden müssen, dass sie die Kalibrierung nicht behindern.

Neben den bevorzugten lumineszenzemittierenden Merkmalsstoffen können weitere Sicherheitsmerkmale auf dem Kalibriermedium vorhanden sein, welche gegebenenfalls ebenfalls überprüft werden können. Dazu zählen beispielsweise Magnetstreifen, NIR-Absorberfarben, Hologramme, Effektpigmente und sonstige mittels Sensoren prüfbare Sicherheitsmerkmale. Gemäß einer besonderen Ausführungsform werden als Merkmalsstoffe Absorberpigmente verwendet, insbesondere NIR-Absorberpigmente.
In einer bevorzugten Ausführungsform enthält das Kalibriermedium zusätzlich eine forensische (verdeckte) Markierung. Im Gegensatz zum maschinenlesbaren Sicherheitsmerkmal des Kalibriermediums kann die forensische Markierung nicht automatisiert durch entsprechende Hochgeschwindigkeits-Sensoren der Banknotenbearbeitungsmaschinen gemessen werden. Stattdessen werden spezielle Untersuchungsmethoden, wie z.B. Spezialmikroskope, benötigt, welche entsprechend höhere Anforderungen an Zeit und Aufwand für die Bestimmung stellen. Bevorzugt handelt es sich bei der forensischen Markierung des Kalibriermediums um einen scharfbandig im sichtbaren Spektralbereich lumineszierenden anorganischen Leuchtstoff, beispielsweise ein Wirtsgitter mit einer Seltenerd-Dotierung aus Samarium, Terbium, Dysprosium, Praseodym oder Europium. Bevorzugt beträgt das Flächengewicht der forensischen Markierung weniger als 20 mg Marker pro m² Kalibriermedium, besonders bevorzugt weniger als 10 mg Marker pro m² Kalibriermedium. Durch die Markierung mit einem forensischen Marker können beispielsweise unterschiedliche Produktionschargen, Hersteller oder Kundenkreise der Kalibrierbelege identifiziert werden.

Um zu gewährleisten, dass sich das Kalibriermedium auch bei den hohen Verarbeitungsgeschwindigkeiten moderner Banknotenbearbeitungsmaschinen beim Vereinzeln und Transport ähnlich wie eine Banknote verhält, kann es notwendig sein die mechanischen Eigenschaften des Kalibriermediums anzupassen. Hierzu können die Steifigkeit und/oder das Gewicht und/oder die Oberflächenrauigkeit, ggf. auch die elektrostatische Aufladung des Kalibriermediums angepasst werden. Es ist möglich, diese Eigenschaften durch Modifikation der den Merkmalsstoff enthaltenden Lackschicht anzupassen. Alternativ oder zusätzlich kann das Kalibriermedium zusätzliche Schichten oder Beschichtungen enthalten, um die entsprechenden Eigenschaften anzupassen.

Die Steifigkeit des Kalibriermediums kann beispielsweise durch Verringerung oder Erhöhung des Elastizitätsmoduls der Lackschicht, z.B. durch Zugabe von das Lackpolymer vernetzenden Additiven (beispielsweise polyfunktionalen Monomeren) bzw. von Weichmachern (beispielsweise Phthalsäureester), angepasst werden.

Die Oberflächenrauheit des Kalibriermediums kann beispielsweise durch eine entsprechende Strukturierung der den Merkmalsstoff enthaltenden Lackschicht (und/ oder einer ggf. zusätzlich aufgebrachten Lackschicht) gesteuert werden. Dabei ist es möglich, die Oberfläche des Kalibriermediums durch eine Nachbearbeitung aufzurauen, z.B. durch gezielte Abrasion der obersten Schicht oder durch Aufdrucken und Aushärten geeigneter Strukturen wie z.B. feine Rillen oder Noppen o.ä. Alternativ kann die Oberflächenrauheit der an der Oberfläche des Kalibriermediums gelegenen Lackschicht auch durch die Grobheit bzw. Feinheit von zugegebenen partikulären Füllstoffen wie z.B. Kreide, Gips oder TiO₂ beeinflusst werden.

Weiterhin können auch Aufkleber mit (im Vergleich zu der an der Oberfläche befindlichen Lackschicht) erhöhtem Reibkoeffizienten auf bestimmte Bereiche des Kalibriermediums angebracht werden, z.B. insbesondere auf die Bereiche, welche mit den Transportrollen der Banknotenbearbeitungsmaschine in Kontakt kommen, um ein sicheres Transportieren des Kalibriermediums zu gewährleisten.

Die elektrostatische Aufladung des Kalibriermediums kann durch Zugabe von Additiven in den Lackschichten gesteuert werden, welche z.B. die Permittivitätszahl oder die Leitfähigkeit der äußeren Schichten beeinflussen. Alternativ kann die Oberfläche des Kalibiermediums durch eine Nachbehandlung modifiziert werden, z.B. durch Aufsprühen von kommerziellem Antistatik-Spray.

Das Gewicht des Kalibriermediums wird durch Anzahl, Dicke und Material der einzelnen das Kalibriermedium zusammensetzenden Schichten und der sonstigen Bestandteile bestimmt. Um das Gewicht des Kalibriermediums bei gleichbleibender Dicke anzupassen, können in einer bevorzugten Ausführungsform einzelnen Lackschichten Füllstoffe mit hoher Dichte zugefügt werden, insbesondere mit einer Dichte von mindestens 4 g/cm³, beispielsweise Bariumsulfat. Alternativ können zum Einstellen des Gewichts zusätzliche Bestandteile auf dem Kalibriermedium befestigt werden, z.B. durch einen Aufkleber angebrachte Metallscheiben. Bevorzugt werden solche Aufkleber an geeigneten Stellen und mit einem geeigneten Gewicht angebracht, um ein Ungleichgewicht durch andere, nicht vollflächig verteilte Bestandteile des Kalibriermediums zu kompensieren. Beispielsweise kann bei einseitiger Aufbringung eines RFID-Chips zur Kompensation ein Aufkleber als Gegengewicht auf der anderen Seite des Kalibriermediums angebracht werden.

### Ausführungsbeispiel:

Zur Herstellung eines erfindungsgemäßen Kalibriermediums wird als Stützschicht ein weißes, opakes PET-Foliensubstrat mit einer Dicke von 190 µm, einer Breite von 15 cm und einer Länge von 40 cm mit einer Lumineszenzstoff-Lackschicht beschichtet. Als im NIR-Bereich lumineszierender Merkmalsstoff wird ein Thulium-dotiertes Yttriumvanadat Y_{0,95}Tm_{0,05}VO₄ verwendet, wie es in Beispiel 2 der Schrift WO 81/03510 beschrieben ist. Dazu wird der im NIR-Bereich lumineszierende Merkmalsstoff auf eine Korngröße D99 < 3 µm zerkleinert, und eine Mischung bestehend aus 10 g des UV-härtenden Lacks 40UC2200 (Huber Farben), 100 mg des Additivs zur Verbesserung der Oberflächenbenetzung BYK UV 3500 (Altana) und 50 mg des zerkleinerten Merkmalsstoffs hergestellt (entspricht einem Merkmalsstoffgehalt von 0.5 Gew.-% im Lack). Die Mischung wird 10 Minuten lang bei 20 Hertz in einer Schwingmühle des Typs Retsch MM 301 behandelt. Anschließend wird die Mischung mit Hilfe eines Spiralrakels (Nassfilmstärke 50 µm) maschinell auf das Foliensubstrat aufgebracht. Nach einer Standzeit von etwa 1 Minute wird die Lackschicht mit dem Merkmalsstoff in einem UV-Trockner ausgehärtet. Es wurden hierbei 0,16 Gramm Lack pro Gramm unbeschichteter Folie aufgetragen, was einem Merkmalsstoffgehalt von 0,07 Gew.-% in der beschichteten Folie entspricht. Das Flächengewicht beträgt in diesem Beispiel 206 mg Merkmalsstoff pro m² Kalibriermedium.

Anschließend wird aus dem beschichteten Foliensubstrat ein Kalibriermedium der Größe 180 x 90 mm² ausgeschnitten. Bei Vermessung von 2400 unterschiedlichen Stellen der Größe 1 mm² beträgt die räumliche Homogenität des Messsignals, ausgedrückt als Standardabweichung in % des Mittelwerts der Lumineszenzintensität des verwendeten Merkmals bei 800 nm, 2,5%.

Auf dem so hergestellten Kalibriermedium werden anschließend ein Aufkleber und ein RFID-Chip angebracht. Auf dem Aufkleber sind unter anderem eine Seriennummer, eine Prüfplakette sowie die Intensitätswerte der verwendeten Lumineszenzpigmente aufgedruckt. Diese Informationen sind ebenfalls auf dem RFID-Chip in digitaler Form hinterlegt und können maschinell ausgelesen werden.

Die Erfindung wird nachfolgend anhand von Figuren noch weiter veranschaulicht. Es wird darauf hingewiesen, dass die Figuren nicht maßstabsgetreu und nicht proportionsgetreu sind. Insbesondere ist die Dicke der Merkmalsstoffschicht stark überhöht dargestellt. Außerdem sind jeweils nur die zum Verständnis der vorliegenden Erfindung wesentlichen Merkmale dargestellt. Es versteht sich, dass zusätzliche Merkmale vorhanden sein können, beziehungsweise dass die dargestellten Merkmale auch in anderen Kombinationen als in einer speziellen Figur dargestellt zur Anwendung kommen können. Gleiche Bezugsziffern bezeichnen jeweils gleiche oder entsprechende Elemente. Es zeigen:
- Fig. 1 bis Fig. 4: jeweils schematische Darstellungen verschiedener Ausführungsformen eines erfindungsgemäßen Kalibriermediums,
- Fig. 5: die Kalibrierung eines Mehrspursensors, wobei ein erfindungsgemäßes Kalibriermedium an dem Sensor vorbeitransportiert wird.

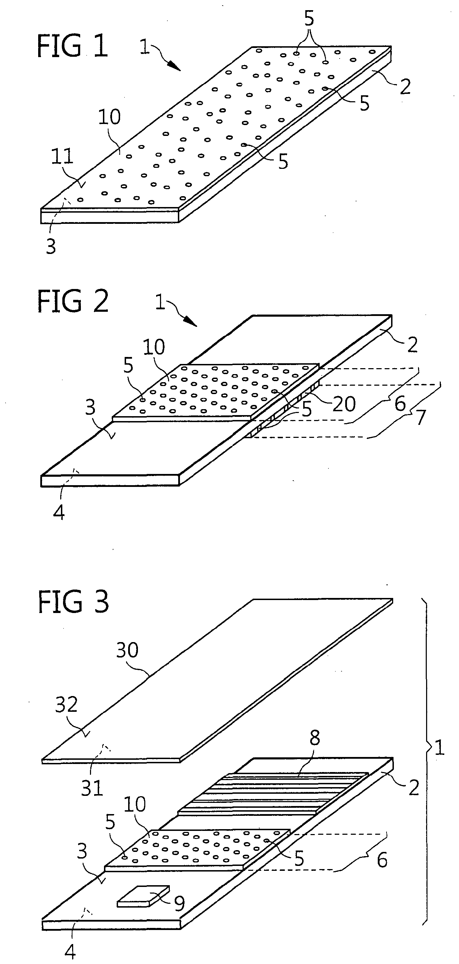

Figur 1 zeigt eine schematische Darstellung einer Ausführungsform eines erfindungsgemäßen Kalibriermediums 1. Das Kalibriermedium 1 weist eine blattförmige Stützschicht 2 auf, die beispielsweise aus PET besteht. Auf der ersten Oberfläche 3 der Stützschicht 2 befindet sich eine Lumineszenzstoffschicht 10, die aus einem Lack besteht, beispielsweise einem UV-Lack, in dem Lumineszenzstoffpartikel 5 statistisch-homogen verteilt sind. In der dargestellten Ausführungsform bedeckt die Lumineszenzstoffschicht 10 die erste Oberfläche 3 der Stützschicht 2 vollflächig. Das dargestellte Kalibriermedium ist zur Kalibrierung eines Mehrspursensors geeignet, wobei bei der Kalibrierung des Sensors die Oberfläche 11 der Lumineszenzstoffschicht 10 dem Sensor zugewandt ist.

Figur 2 zeigt eine alternative Ausführungsform eines erfindungsgemäßen Kalibriermediums 1. In der in Figur 2 dargestellten Ausführungsform ist die Stützschicht 2 an ihren beiden Oberflächen jeweils mit einer Lumineszenzstoffschicht ausgestattet. An der ersten Oberfläche 3 der Stützschicht 2 befindet sich eine erste Lumineszenzstoffschicht 10, und an der zweiten Oberfläche 4 der Stützschicht 2 befindet sich eine zweite Lumineszenzstoffschicht 20. Die erste Lumineszenzstoffschicht 10 und die zweite Lumineszenzstoffschicht 20 weisen identische Zusammensetzungen auf, d.h. sie bestehen aus dem selben Lack, in dem jeweils gleiche Lumineszenzstoffpartikel 5 statistisch-homogen verteilt sind. In der dargestellten Ausführungsform bedecken die Lumineszenzstoffschichten jeweils nur Teilbereiche der Oberflächen der Stützschicht 2, d.h. die erste Lumineszenzstoffschicht 10 befindet sich auf dem Teilbereich 6 der ersten Oberfläche 3 der Stützschicht 2, und die zweite Lumineszenzstoffschicht 20 befindet sich auf dem Teilbereich 7 der zweiten Oberfläche 4 der Stützschicht 2. Die beschichteten Teilbereiche 6, 7 bilden die Referenzbereiche des Kalibriermediums 1. Mit dem dargestellten Kalibriermedium kann eine gleichzeitige Kalibrierung von Sensoren, die einander gegenüberliegend angeordnet sind, durchgeführt werden.

Figur 3 zeigt eine weitere alternative Ausführungsform eines erfindungsgemäßen Kalibriermediums 1, wobei hier die Lumineszenzstoffschicht 10 zwischen der Stützschicht 2 und einer Schutzfolie 30 geschützt angebracht ist. Die Lumineszenzstoffschicht 10 ist wiederum eine Lackschicht, beispielsweise aus einem UV-Lack, in der Lumineszenzstoffpartikel 5 statistisch-homogen verteilt sind. Die Lumineszenzstoffschicht 10 bedeckt einen Teilbereich 6 der ersten Oberfläche 3 der Stützschicht 2, während die übrigen Bereiche der ersten Oberfläche 3 von einer Lumineszenzstoffschicht frei sind. Auf diesen Bereichen ist in der dargestellten Ausführungsform ein Barcode 8 aufgedruckt und ein Aufkleber 9 angebracht. Der Barcode 8 kann beispielsweise aus einer konventionellen Druckfarbe bestehen und den in dem Bereich 6 zu detektierenden Lumineszenz-Sollwert angeben. Der Aufkleber 9 kann beispielsweise Seriennummern, maschinelle Erkennungsmuster oder Informationen über die korrekte Einlegerichtung des Kalibriermediums aufweisen. Alternativ können derartige Informationen auch in einem an dem Kalibriermedium angebrachten Chip gespeichert sein.

Der mit der Lumineszenzstoffschicht 10 beschichtete Teilbereich 6 bildet den Referenzbereich des Kalibriermediums. Die Schicht 10 kann unmittelbar auf einem Teilbereich der ersten Oberfläche 3 der Stützschicht 2 ausgebildet werden, oder alternativ auf einem anderen Substrat ausgebildet werden, das dann auf dem Teilbereich 6 angebracht wird, beispielsweise aufgeklebt wird. Gemäß einer alternativen Ausführungsform kann die Lumineszenzstoffschicht 10 auf einem temporären Träger ausgebildet und dann auf den Teilbereich 6 transferiert werden. Es ist jedoch bevorzugt, die Lumineszenzstoffschichten unmittelbar auf einer Oberfläche der Stützschicht auszubilden, unabhängig davon, ob es sich um teilflächige oder vollflächige Lumineszenzstoffschichten handelt.

Auf die erste Oberfläche 3 der Stützschicht 2 wird eine Schutzfolie 30 aufgebracht, beispielsweise durch Verkleben ihrer ersten Oberfläche 31 mit der Stützschicht 2. Die Lumineszenzstoffschicht 10, der Barcode 8 und der Aufkleber 9 werden auf diese Weise durch die Schutzfolie 30 geschützt. Auf der zweiten Oberfläche 32 der Schutzfolie 30 können weitere Markierungen, Aufdrucke und/oder Aufkleber angebracht werden. Es versteht sich, dass die Schutzfolie 30 aus einem Material bestehen muss, das zumindest für Wellenlängen in dem Bereich der Anregungswellenlängen sowie der Emissionswellenlängen des Lumineszenzstoffs hinreichend durchlässig ist, um eine angemessene Anregung des Lumineszenzstoffs sowie eine angemessene Detektierbarkeit der Emissionen zu gewährleisten. Gleiches gilt für Klebstoffe. Beim Kalibrieren eines Sensors, beispielsweise eines Mehrspursensors, ist die Schutzfolie 30 dem Sensor zugewandt.

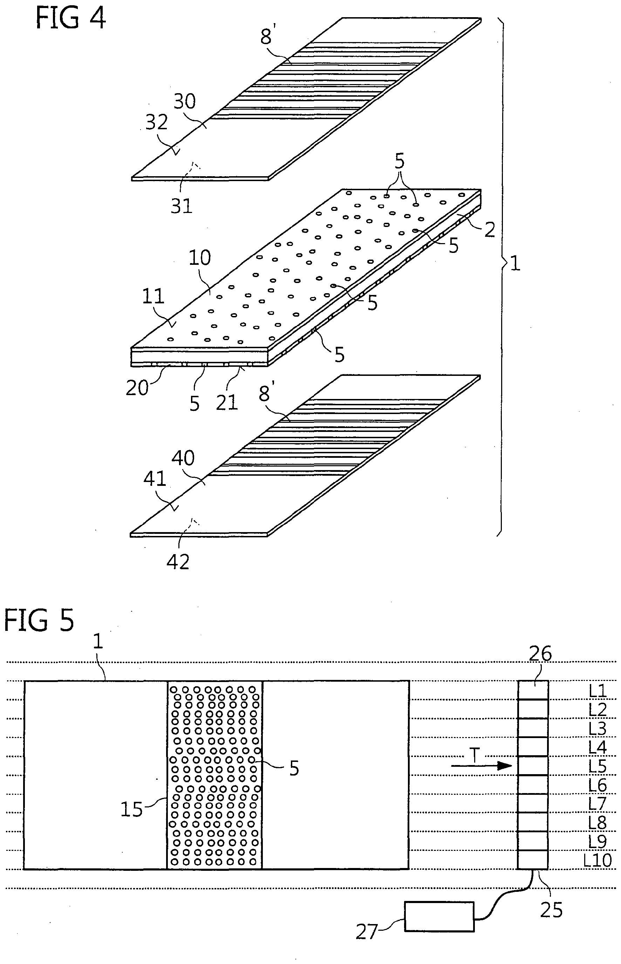

Figur 4 zeigt eine Ausführungsform eines erfindungsgemäßen Kalibriermediums 1, die wie die in Figur 2 dargestellte Ausführungsform zum Kalibrieren zweier einander gegenüberliegender Mehrspursensoren geeignet ist. Bei der in Figur 4 dargestellten Ausführungsform sind eine erste Lumineszenzstoffschicht 10 und eine zweite Lumineszenzstoffschicht 20 jeweils vollflächig auf der ersten Oberfläche 3 bzw. der zweiten Oberfläche 4 der Stützschicht 2 angebracht. Die erste und die zweite Lumineszenzstoffschicht sind bevorzugt identisch und enthalten jeweils statistisch-homogen verteilte Partikel 5 desselben Lumineszenzstoffs. Die freie Oberfläche 11 der ersten Lumineszenzstoffschicht 10 ist mit einer ersten Oberfläche 31 einer ersten Schutzfolie 30 verbunden, beispielsweise verklebt, und die freie Oberfläche 21 der zweiten Lumineszenzstoffschicht 20 ist mit der ersten Oberfläche 41 einer zweiten Schutzfolie 40 verbunden, beispielsweise verklebt. Der Schichtverbund aus erster Lumineszenzstoffschicht 10, Stützschicht 2 und zweiter Lumineszenzstoffschicht 20 kann auch zwischen den Schutzfolien 30, 40 eingeschweißt werden.

Auf der ersten Oberfläche 31 oder der zweiten Oberfläche 32 (einer Außenoberfläche des Kalibriermediums) der ersten Schutzfolie 30 befindet sich ein Barcode 8'. Auf der ersten Oberfläche 41 oder der zweiten Oberfläche 42 (einer Außenoberfläche des Kalibriermediums) der zweiten Schutzfolie 40 befindet sich ebenfalls ein Barcode 8'. Die Barcodes 8' geben den von einem Sensor zu detektierenden Lumineszenz-Sollwert der Messspuren in codierter Form an und sind beispielsweise aufgedruckt. Der Sollwert ist in diesem Beispiel für alle Messspuren derselbe. Die Sollwert-Barcode Aufdrucke 8' sind für die Emissionsstrahlung des Lumineszenzstoffs (Partikel 5) nicht durchlässig, sondern absorbierend, während die Schutzfilme 30, 40 sowie gegebenenfalls verwendete Klebstoffe für die Anregungs- und Emissionsstrahlung zumindest weitgehend durchlässig sein müssen. Das Kalibriermedium 1 kann weitere Folien und/oder Applikationen (Aufkleber, Chips, etc.) aufweisen, sofern ein ausreichend großer Referenzbereich (Messbereich) frei bleibt und die Messung nicht gestört wird.

Bei Kalibriermedien, die wie das in Figur 4 dargestellte Kalibriermedium eine Mehrzahl von Schichten bzw. Folien aufweisen, wird die Stützschicht 2 typischerweise etwas dünner ausgebildet als bei einem Kalibriermedium, wie es in Figur 1 dargestellt ist.

In Figur 5 ist schematisch ein Kalibrierverfahren eines Mehrspursensors, beispielsweise in einer Banknotenbearbeitungsmaschine, unter Verwendung eines erfindungsgemäßen Kalibriermediums dargestellt. Bei dem dargestellten Kalibriermedium handelt es sich um ein Kalibriermedium, wie es in Figur 2 dargestellt ist, wobei in der Aufsicht-Darstellung nur eine der Oberflächen des Kalibriermediums zu sehen ist. Die entgegengesetzte Oberfläche ist bevorzugt identisch ausgebildet, sodass einander gegenüberliegende Sensoren, die eine gleichzeitige Prüfung der Oberseite und der Unterseite eines Wertdokuments erlauben, gleichzeitig kalibriert werden können.

In der beispielhaften Darstellung der Figur 5 ist der zu kalibrierende Sensor 25 ein Mehrspursensor mit 10 Sensorelementen 26, die Messsignale eines Teilbereichs eines zu prüfenden Wertdokuments, bzw. des Kalibriermediums, aufnehmen. Der Sensor 25 ist mit einer Kalibriereinrichtung 27 verbunden. Das Wertdokument, bzw. bei der Kalibrierung das Kalibriermedium, wird in der Transportrichtung T in der Messebene des Sensors an dem Sensor vorbeitransportiert, wobei jedes Sensorelement 26 einen streifenförmigen Bereich, d.h. eine Messspur L1 bis L10, vermisst. Das erfindungsgemäße Kalibrierverfahren ist selbstverständlich auch für Sensoren mit nur einer einzigen Messspur geeignet, aber bei Sensoren mit mehreren Messspuren kommen die Vorteile besonders zur Geltung. Ebenso umfasst das erfindungsgemäße Kalibrierverfahren auch Verfahren, bei denen das Kalibriermedium nicht transportiert wird, sondern in die Messebene eines Sensors, oder zweier gegenüberliegender Sensoren, eingelegt wird.

Das Kalibriermedium 1 weist eine streifenförmige Lumineszenzstoffschicht mit Lumineszenzstoffpartikeln 5 auf, die den Referenzbereich 15 des Kalibriermediums bildet. Bei der Kalibrierung nehmen die Sensorelemente 26 in den Messspuren L1 bis L10 Messsignale aus dem Referenzbereich 15 auf. Dank der homogenen Verteilung der Lumineszenzstoffpartikel 5 in der Lackschicht des Referenzbereiches 15 ist die Messsignalhöhe für alle Sensorelemente in den Messspuren L1 bis L10 im Wesentlichen identisch, da das Messsignal eine Standardabweichung der Lumineszenzintensität von weniger als 5% geteilt durch die Größe der Messfleckfläche in Quadratmillimetern des Mittelwerts der Lumineszenzintensität aufweist. Die einzelnen Sensorelemente 26 des Sensors 25 werden daher in im Wesentlichen identischer Weise kalibriert. Ein zu prüfendes Wertdokument, das an dem Sensor 25 vorbei transportiert wird und höchstens so breit ist wie das Kalibriermedium, kann anhand der Messsignale der kalibrierten Messspuren L1-L10 oder eines Teils dieser Messspuren geprüft werden.

Zum Kalibrieren des Sensors 25 werden die Messwerte der Messspuren L1-L10 mit dem für die Messspuren gültigen Sollwert verglichen. Und in Abhängigkeit dieses Vergleichs wird als Ergebnis der Kalibrierung ausgegeben, ob der jeweilige Messwert mit dem Sollwert übereinstimmt oder nicht. Das Ausgeben erfolgt z.B. durch eine entsprechende Anzeige an dem zu kalibrierenden Sensor 25 oder an einer daran angeschlossenen Kalibriereinrichtung. Falls eine Abweichung eines Messwerts vom Sollwert festgestellt wird, die einen vorbestimmten Wert überschreitet, können die betreffenden Messspuren des Sensors 25 justiert werden, um eine Übereinstimmung des jeweiligen Messwerts mit dem Sollwert zu erreichen. Gegebenenfalls können diese Schritte wiederholt werden, bis die Abweichung zwischen Messwert und Sollwert den vorbestimmten Wert nicht mehr überschreitet.

Bei den erfindungsgemäßen Kalibriermedien beträgt die Standardabweichung des Messsignals vom Mittelwert des Lumineszenzsignals (sofern die Merkmalsstoffe Lumineszenzstoffe sind) bei 2400 Messpunkten der Messfleckgröße 1 mm² weniger als 5%, bevorzugt weniger als 3%. Werden entlang des Kalibriermediums mehrere einzelne Messspuren durch einen Sensor erfasst, beträgt die Abweichung des gemittelten Messsignals zwischen einzelnen Spuren weniger als 2%, bevorzugt weniger als 1%. Eine derartige Genauigkeit kann mit Kalibriermedien des Stands der Technik für geringe Merkmalsstoffgehalte von unter 0,1 Gew.-% nicht annähernd erreicht werden.

## Patentansprüche

1. Kalibriermedium (1) zum Kalibrieren eines Sensors (25), der zur Prüfung mindestens einer optischen Eigenschaft von Wertdokumenten ausgebildet ist, wobei es mindestens eine Merkmalsstoffschicht (10, 20) und mindestens eine Stützschicht (2) für die Merkmalsstoffschicht (10, 20) aufweist, wobei die Merkmalsstoffschicht (10, 20) eine Lackschicht ist, in welcher der Merkmalsstoff in Form von Partikeln (5) dispergiert ist, und wobei der Merkmalsstoff
- ein Lumineszenzstoff oder eine Absorbersubstanz ist, und
- mit einem Flächengewicht von weniger als 2500 mg Merkmalsstoff pro m² Kalibriermedium, bevorzugt weniger als 1500 mg Merkmalsstoff pro m² Kalibriermedium, besonders bevorzugt von weniger als 300 mg Merkmalsstoff pro m² Kalibriermedium, in dem Kalibriermedium vorliegt, **dadurch gekennzeichnet, dass** der Merkmalsstoff
- in der Merkmalsstoffschicht (10, 20) in einer Konzentration von weniger als 0,5 Gew. %, bezogen auf das Gesamtgewicht des Kalibriermediums vorliegt, und
- eine Partikelgröße D99 unter 10 µm, bevorzugt unter 5 µm, besonders bevorzugt unter 3 µm, aufweist.

2. Kalibriermedium (1) nach Anspruch 1, **dadurch gekennzeichnet, dass** der Merkmalsstoff ein zur Echtheitssicherung von Wertdokumenten geeigneter Merkmalsstoff ist, insbesondere dass der Merkmalsstoff des Kalibriermediums derjenige Merkmalsstoff ist, den die Wertdokumente aufweisen, für deren Prüfung der mit dem Kalibriermedium (1) zu kalibrierende Sensor (25) kalibriert werden soll, wobei die Konzentration, in der der Merkmalsstoff in dem Kalibriermedium vorliegt, vorzugsweise höchstens einen Faktor 5 über der Konzentration liegt, in der der Merkmalsstoff in den Wertdokumenten vorliegt, für deren Prüfung der mit dem Kalibriermedium (1) zu kalibrierende Sensor (25) kalibriert werden soll.

3. Kalibriermedium (1) nach einem der Ansprüche 1 bis 2, **dadurch gekennzeichnet, dass** die Merkmalsstoffschicht ein Netzmittel enthält, welches die Oberflächenspannung der Merkmalsstoffschicht so verringert, dass sich die Merkmalsstoffschicht räumlich homogen über das Kalibriermedium verteilt.

4. Kalibriermedium (1) nach einem der Ansprüche 1 bis 3, **dadurch gekennzeichnet, dass** der Merkmalsstoff derart räumlich homogen über das Kalibriermedium verteilt ist, dass das an unterschiedlichen Stellen des Kalibriermediums erhaltene optische Messsignal so wenig variiert, dass das Verhältnis aus der Standardabweichung zum Mittelwert der Intensität des Messsignals kleiner ist als 5% geteilt durch die Wurzel der in Quadratmillimetern angegebenen Messfleckfläche, bevorzugt weniger als 3% geteilt durch die Wurzel der in Quadratmillimetern angegebenen Messfleckfläche.

5. Kalibriermedium (1) nach einem der Ansprüche 1 bis 4, **dadurch gekennzeichnet, dass** das Kalibriermedium (1) zusätzlich eine forensische Markierung aufweist, die insbesondere durch eine lumineszierende Substanz gebildet wird.

6. Kalibriermedium (1) nach Anspruch 5, **dadurch gekennzeichnet, dass** die forensische Markierung in der Merkmalsstoffschicht (10, 20) dispergiert ist.

7. Verfahren zur Herstellung eines Kalibriermediums (1) gemäß einem der vorhergehenden Ansprüche mit folgenden Schritten:
- Zerkleinern eines Merkmalsstoffs, der ein Lumineszenzstoff oder eine Absorbersubstanz ist, zu Partikeln (5) einer Partikelgröße D99 unter 10 µm, bevorzugt unter 5 µm, besonders bevorzugt unter 3 µm,
- Bereitstellen eines Lacks, der mindestens ein Bindemittel und gegebenenfalls ein Netzmittel enthält,
- Herstellen eines Merkmalsstoff-Lacks durch Dispergieren der Merkmalsstoffpartikel (5) in dem Lack,
- Auftragen des Merkmalsstoff-Lacks auf mindestens eine erste Oberfläche (3) der Stützschicht (2), wobei der Merkmalsstoff mit einem Flächengewicht von weniger als 2500 mg, bevorzugt weniger als 1500 mg besonders bevorzugt von weniger als 300 mg Merkmalsstoff pro m² Kalibriermedium aufgetragen wird, wobei der Merkmalsstoff in der Merkmalsstoffschicht (10, 20) in einer Konzentration von weniger als 0,5 Gew. %, bezogen auf das Gesamtgewicht des Kalibriermediums vorliegt, und
- Erzeugen der mindestens einen Merkmalsstoffschicht (10, 20) durch Trocknen lassen und/oder Härten und/oder Polymerisieren des Merkmalsstoff-Lacks,
wobei der Merkmalsstoff in der Merkmalsstoffschicht (10, 20) in einer Konzentration von weniger als 0,5 Gew. %, bezogen auf das Gesamtgewicht des Kalibriermediums vorliegt.

8. Verfahren nach Anspruch 7, **dadurch gekennzeichnet, dass** als Lack ein lösemittelfreier UV-Lack verwendet wird, der 25 bis 95 Gew.% oligomere Bindemittelharze, 0 bis 60 Gew.% Reaktivverdünner, 1 bis 5 Gew.% mindestens eines Photoinitiators, 1 bis 5 Gew.% eines Netzmittels, und optional Füllstoffe enthält, und dass der Merkmalsstoff-Lack durch Bestrahlung mit einer breitbandigen UVC- oder UVB-Quelle gehärtet wird.

9. Verfahren nach einem der Ansprüche 7 bis 8, **dadurch gekennzeichnet, dass** die mindestens eine erste Oberfläche (3) der Stützschicht (2) vor dem Auftragen des Merkmalsstoff-Lacks mit einem Haftvermittler oder einer Grundierung beschichtet wird.

10. Verfahren zum Kalibrieren eines Sensors (25), der zur Prüfung mindestens einer optischen Eigenschaft von Wertdokumenten ausgebildet ist, mit folgenden Schritten:
a) Einbringen eines Kalibriermediums (1) in die Messebene des Sensors (25), wobei das Kalibriermedium eine Sollwertvorgabe für die optische Eigenschaft liefert,
b) Bestimmen mindestens eines Messwerts der optischen Eigenschaft durch Prüfen des Kalibriermediums (1) hinsichtlich der optischen Eigenschaft,
c) Vergleichen des Messwerts der optischen Eigenschaft mit einem Sollwert und Ausgeben eines Ergebnisses der Kalibrierung in Abhängigkeit dieses Vergleichs,
wobei das Kalibriermedium ein Kalibriermedium (1) nach einem der Ansprüche 1 bis 6 ist.

11. Verfahren nach Anspruch 10, **dadurch gekennzeichnet, dass** die zu prüfende optische Eigenschaft eine Lumineszenzeigenschaft eines Merkmalsstoffs zur Echtheitssicherung von Wertdokumenten ist.

12. Verfahren nach Anspruch 10 oder 11, **dadurch gekennzeichnet, dass** der zu kalibrierende Sensor (25) zur Prüfung von Wertdokumenten, die entlang einer Transportrichtung T an dem Sensor vorbeitransportiert werden, ausgebildet ist, und bei der Kalibrierung anstelle eines Wertdokuments das Kalibriermedium (1) an dem Sensor vorbeitransportiert wird.

13. Verfahren nach einem der Ansprüche 10 bis 12, **dadurch gekennzeichnet, dass** der Sensor (25) eine Mehrzahl von Sensorelementen (26) aufweist, die dazu ausgebildet sind, Messsignale aus einer Mehrzahl von Messspuren (L1-L10) aufzunehmen, die in Bezug auf die Transportrichtung des Wertdokuments nebeneinander liegen.

## Claims

1. A calibration medium (1) for calibrating a sensor (25) which is designed for checking at least one optical property of value documents, wherein it has at least one feature substance layer (10, 20) and at least one support layer (2) for the feature substance layer (10, 20), wherein the feature substance layer (10, 20) is a lacquer layer in which the feature substance is dispersed in the form of particles (5), and wherein the feature substance
- is a luminescent substance or an absorbent material, and
- is present in the calibration medium with a weight per unit area of less than 2500 mg of feature substance per m² of calibration medium, preferably less than 1500 mg of feature substance per m² of calibration medium, particularly preferably of less than 300 mg of feature substance per m² of calibration medium, **characterized in that** the feature substance
- is present in the feature substance layer (10, 20) in a concentration of less than 0.5 wt.%, based on the total weight of the calibration medium, and
- has a particle size D99 below 10 µm, preferably below 5 µm, particularly preferably below 3 µm.

2. The calibration medium (1) according to claim 1, **characterized in that** the feature substance is a feature substance suitable for safeguarding the authenticity of value documents, in particular that the feature substance of the calibration medium is the feature substance which the value documents have, for the checking of which the sensor (25) to be calibrated with the calibration medium (1) is to be calibrated, wherein the concentration in which the feature substance is present in the calibration medium is preferably at most a factor of 5 above the concentration in which the feature substance is present in the value documents, for the checking of which the sensor (25) to be calibrated with the calibration medium (1) is to be calibrated.

3. The calibration medium (1) according to any of claims 1 to 2, **characterized in that** the feature substance layer contains a wetting agent which reduces the surface tension of the feature substance layer such that the feature substance layer distributes itself spatially homogeneously over the calibration medium.

4. The calibration medium (1) according to any of claims 1 to 3, **characterized in that** the feature substance is distributed spatially homogeneously over the calibration medium such that the optical measurement signal obtained at different points of the calibration medium varies so little that the ratio of the standard deviation to the mean value of the intensity of the measurement signal is less than 5% divided by the root of the measurement spot area expressed in square millimeters, preferably less than 3% divided by the root of the measurement spot area expressed in square millimeters.

5. The calibration medium (1) according to any of claims 1 to 4, **characterized in that** the calibration medium (1) additionally has a forensic marking, which is formed in particular by a luminescent substance.

6. The calibration medium (1) according to claim 5, **characterized in that** the forensic marking is dispersed in the feature substance layer (10, 20).

7. A method for manufacturing a calibration medium (1) according to any of the preceding claims, having the following steps:
- shredding a feature substance, which is a luminescent substance or an absorbent material, into particles (5) having a particle size D99 below 10 µm, preferably below 5 µm, particularly preferably below 3 µm,
- providing a lacquer which contains at least one binder and optionally a wetting agent,
- producing a feature substance lacquer by dispersing the feature substance particles (5) in the lacquer,
- applying the feature substance lacquer to at least one first surface (3) of the support layer (2), wherein the feature substance is applied with a weight per unit area of less than 2500 mg, preferably less than 1500 mg, particularly preferably less than 300 mg of feature substance per m² of calibration medium, wherein the feature substance is present in the feature substance layer (10, 20) in a concentration of less than 0.5 wt.% based on the total weight of the calibration medium, and
- producing the at least one feature substance layer (10, 20) by letting the feature substance lacquer dry and/or curing and/or polymerizing the feature substance lacquer,
wherein the feature substance is present in the feature substance layer (10, 20) in a concentration of less than 0.5 wt.% based on the total weight of the calibration medium.

8. The method according to claim 7, **characterized in that** the lacquer used is a solvent-free UV lacquer which contains 25 to 95 wt. % oligomeric binder resins, 0 to 60 wt. % reactive diluent, 1 to 5 wt. % of at least one photoinitiator, 1 to 5 wt.% of a wetting agent, and optionally fillers, and that the feature substance lacquer is cured by irradiation with a broadband UVC or UVB source.

9. The method according to any of claims 7 to 8, **characterized in that** the at least one first surface (3) of the support layer (2) is coated with an adhesion promoter or a primer prior to the application of the feature substance lacquer.

10. A method for calibrating a sensor (25) which is designed for checking at least one optical property of value documents, having the following steps:
a) introducing a calibration medium (1) into the measuring plane of the sensor (25), wherein the calibration medium provides a target value setting for the optical property,
b) determining at least one measurement value of the optical property by checking the calibration medium (1) with regard to the optical property,
c) comparing the measurement value of the optical property with a target value and outputting a result of the calibration in dependence on this comparison,
wherein the calibration medium is a calibration medium (1) according to any of claims 1 to 6.

11. The method according to claim 10, **characterized in that** the optical property to be checked is a luminescent property of a feature substance for safeguarding the authenticity of value documents.

12. Method according to claim 10 or 11, **characterized in that** the sensor (25) to be calibrated is designed for checking value documents which are transported past the sensor along a transport direction T, and upon the calibration, instead of a value document, the calibration medium (1) is transported past the sensor.

13. The method according to any of claims 10 to 12, **characterized in that** the sensor (25) has a plurality of sensor elements (26) which are designed to receive measurement signals from a plurality of measurement tracks (L1-L10) which lie next to one another with respect to the transport direction of the value document.

## Revendications

1. Moyen d'étalonnage (1) destiné à l'étalonnage d'un capteur (25) conçu pour l'examen d'au moins une propriété optique de documents de valeur, cependant qu'il comporte au moins une couche de substance caractéristique (10, 20) et au moins une couche de support (2) pour la couche de substance caractéristique (10, 20), cependant que la couche de substance caractéristique (10, 20) est une couche de vernis dans laquelle la substance caractéristique est dispersée sous forme de particules (5), et cependant que la substance caractéristique
- est une substance luminescente ou une substance absorbante, et
- avec un grammage de moins de 2500 mg de substance caractéristique par m² de moyen d'étalonnage, de préférence de moins de 1500 mg de substance caractéristique par m² de moyen d'étalonnage, particulièrement de préférence de moins de 300 mg de substance caractéristique par m² de moyen d'étalonnage, se trouve dans le moyen d'étalonnage, **caractérisé en ce que** la substance caractéristique
- se trouve dans la couche de substance caractéristique (10, 20) dans une concentration de moins de 0,5 pourcent par poids par rapport au poids total du moyen d'étalonnage, et
- a une taille de particules D99 en-dessous de 10 µm, de préférence en-dessous de 5 µm, particulièrement de préférence en-dessous de 3 µm.

2. Moyen d'étalonnage (1) selon la revendication 1, **caractérisé en ce que** la substance caractéristique est une substance caractéristique adaptée à sécurisation de l'authenticité de documents de valeur, particulièrement **en ce que** la substance caractéristique du moyen d'étalonnage est la substance caractéristique que comportent les documents de valeur pour l'examen desquels le capteur (25) à étalonner avec le moyen d'étalonnage (1) doit être étalonné, cependant que la concentration dans laquelle se trouve la substance caractéristique dans le moyen d'étalonnage se situe de préférence à au plus un facteur 5 au-dessus de la concentration dans laquelle se trouve la substance caractéristique dans les documents de valeur pour l'examen desquels le capteur (25) à étalonner avec le moyen d'étalonnage (1) doit être étalonné.

3. Moyen d'étalonnage (1) selon une des revendications de 1 à 2, **caractérisé en ce que** la couche de substance caractéristique contient un agent tensioactif qui réduit de telle sorte la tension de surface de la couche de substance caractéristique que la couche de substance caractéristique se répartit de façon spatialement homogène sur le moyen d'étalonnage.

4. Moyen d'étalonnage (1) selon une des revendications de 1 à 3, **caractérisé en ce que** la substance caractéristique est répartie de telle manière de façon spatialement homogène sur le moyen d'étalonnage que le signal de mesure optique reçu à différents endroits du moyen d'étalonnage varie si peu que le rapport entre l'écart standard et la valeur moyenne de l'intensité du signal de mesure est plus petit que 5 % divisés par la racine de la surface du spot de mesure indiquée en millimètres carrés, de préférence inférieur à 3 % divisés par la racine de la surface du spot de mesure indiquée en millimètres carrés.

5. Moyen d'étalonnage (1) selon une des revendications de 1 à 4, **caractérisé en ce que** le moyen d'étalonnage (1) comporte en outre un marquage forensique qui est en particulier constitué par une substance luminescente.

6. Moyen d'étalonnage (1) selon la revendication 5, **caractérisé en ce que** le marquage forensique est dispersé dans la couche de substance caractéristique (10, 20).

7. Procédé de fabrication d'un moyen d'étalonnage (1) selon une des revendications précédentes, comprenant les étapes suivantes :
- broyage d'une substance caractéristique qui est une substance luminescente ou une substance absorbante, de manière à obtenir des particules (5) d'une taille de particules D99 en-dessous de 10 µm, de préférence en-dessous de 5 µm, particulièrement de préférence en-dessous de 3 µm,
- mise à disposition d'un vernis contenant au moins un liant et éventuellement un agent tensioactif,
- fabrication d'un vernis de substance caractéristique par dispersion des particules de substance caractéristique (5) dans le vernis,
- application du vernis de substance caractéristique sur au moins une première surface (3) de la couche de support (2), cependant que la substance caractéristique est appliquée avec un grammage de moins de 2500 mg, de préférence de moins de 1500 mg, particulièrement de préférence de moins de 300 mg de substance caractéristique par m² de moyen d'étalonnage, cependant que la substance caractéristique se trouve dans la couche de substance caractéristique (10, 20) dans une concentration de moins de 0,5 pourcent par poids par rapport au poids total du moyen d'étalonnage, et
- génération de la au moins une couche de substance caractéristique (10, 20) en laissant sécher et/ou par durcissement et/ou polymérisation du vernis de substance caractéristique,
cependant que la substance caractéristique se trouve dans la couche de substance caractéristique (10, 20) dans une concentration inférieure à 0,5 pourcent par poids par rapport au poids total du moyen d'étalonnage.

8. Procédé selon la revendication 7, **caractérisé en ce que**, en tant que vernis, un vernis UV sans solvant est utilisé, lequel contient entre 25 et 95 pourcent par poids de résines liantes oligomères, entre 0 et 60 pourcent par poids de diluant réactif, entre 1 et 5 pourcent par poids d'au moins un photo-initiateur, entre 1 et 5 pourcent par poids d'un agent tensioactif, et en option des matière de remplissage, et que le vernis de substance caractéristique est durci par irradiation avec une source large bande UVC ou UVB.

9. Procédé selon une des revendications de 7 à 8, **caractérisé en ce que** la au moins une première surface (3) de la couche de protection (2) est, avant l'application du vernis de substance caractéristique, revêtue avec un agent adhésif ou avec un apprêt.

10. Procédé d'étalonnage d'un capteur (25) conçu pour l'examen d'au moins une propriété optique de documents de valeur, comprenant les étapes suivantes :
a) introduction d'un moyen d'étalonnage (1) dans le plan de mesure du capteur (25), cependant que le moyen d'étalonnage livre une spécification de valeur de consigne pour la propriété optique,
b) détermination d'au moins une valeur de mesure de la propriété optique par examen du moyen d'étalonnage (1) quant à la propriété optique,
c) comparaison de la valeur de mesure de la propriété optique avec une valeur de consigne, et délivrance d'un résultat de l'étalonnage en fonction de cette comparaison,
cependant que le moyen d'étalonnage est un moyen d'étalonnage (1) selon une des revendications de 1 à 6.

11. Procédé selon la revendication 10, **caractérisé en ce que** la propriété optique à examiner est une propriété luminescente d'une substance caractéristique destinée à la sécurisation de l'authenticité de documents de valeur.

12. Procédé selon la revendication 10 ou 11, **caractérisé en ce que** le capteur (25) à étalonner est conçu pour l'examen de documents de valeur qui sont transportés le long d'une direction de transport T en passant par le capteur, et que, lors de l'étalonnage, au lieu d'un document de valeur, c'est le moyen d'étalonnage (1) qui est transporté en passant par le capteur.

13. Procédé selon une des revendications de 10 à 12, **caractérisé en ce que** le capteur (25) comporte une pluralité d'éléments de capteur (26) conçus pour enregistrer des signaux de mesure à partir d'une pluralité de pistes de mesure (L1-L10) qui, par rapport à la direction de transport du document de valeur, sont les unes à côté des autres.
